# EUROPEAN PATENT SPECIFICATION

(11) **EP 0 891 394 B1**
(45) Date of publication and mention of the grant of the patent: **04.10.2001**
(21) Application number: 97906325.2
(22) Date of filing: 25.03.1997
(51) Int. Cl.: C09B 29/30, C09B 43/16

(54) **BASIC MONOAZO COMPOUNDS**
BASISCHE MONOAZOVERBINDUNGEN
COMPOSES MONOAZO BASIQUES

(30) Priority: 27.03.1996 GB 9606453
(43) Date of publication of application: 20.01.1999
(73) Proprietor: Clariant Finance (BVI) Limited, Road Town, Tortola (VG)
(72) Inventor: PEDRAZZI, Reinhard, CH-4123 Allschwil (CH)
(74) Representative: D'haemer, Jan Constant
(86) International application number: IB9700294
(87) International publication number: WO9735925

(56) References cited:
- EP-A- 0 194 885
- DE-A- 2 915 323
- DE-A- 3 625 576

## Description

The invention relates to basic monoazo compounds containing a sulphonic acid group which compounds are in metal-free or copper complex form, and salts thereof and mixtures of these compounds or complexes which may be in internal or external salt form. They are suitable for use as dyestuffs.

DE-A-3 625 576 describes basic mono- or disazo compounds, the coupling component of which is a derivative of 1-hydroxynaphthalene-3- or -4-sulphonic acid having in its 6- or 7-position a triazinylamino radical which is substituted by two basic substituents, and the diazo component of which is aniline or a derivative thereof which is mono- or disubstituted whereby the substituent, or one of the substituents, may, *inter alia*, be an optionally substituted sulphonamido group and whereby said aniline or derivative thereof may, in addition, be substituted by a phenylazo group, the phenyl moiety of which is unsubstituted or monosubstituted by, *inter alia*, an optionally substituted sulphonamido group.

DE-A-2 915 323 describes, *inter alia* (cf. Example 79 and Table 5), basic monoazo compounds, the coupling component of which is a derivative of 1-hydroxynaphthalene-3-sulphonic acid having in its 6-position a triazinylamino radical which is substituted by two basic substituents, and the diazo component of which is 2-aminonaphthalene-5-sulphonamide, or aniline or a derivative thereof which is mono- or disubstituted by methoxy, benzoyl, acetyl, phenoxy, methyl, chloro or phenylcarbamoyl.

According to the invention there are provided compounds of formula I 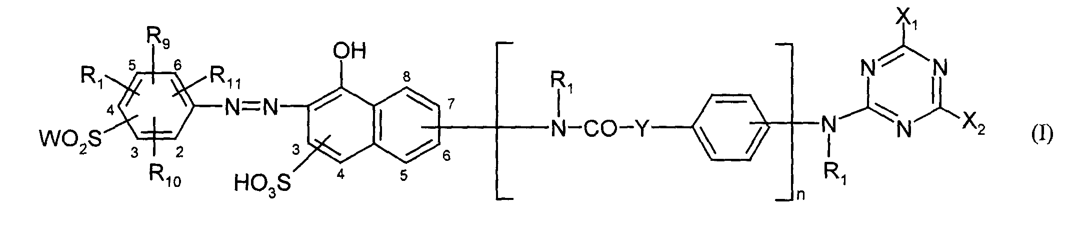 wherein
- W: is OH or NR₁₃R₁₄
- Y: is NH or a direct bond
- R9: is OH, Cl, C₁-C₄alkyl, C₂-C₄hydroxyalkyl, C₂-C₄hydroxyalkoxy, NH₂, NO₂, COOH, COO(C₁-C₄alkyl), SO₂NR₁₃R₁₄, SO₂OR₁, C₁-C₄alkoxy
- R₁₃: is H, phenyl, cycloalkyl or C₁-C₆alkyl optionally substituted by NR₁₆R₁₇ or OH;
- R₁₄: is H, C₁-C₆alkyl, optionally substituted *by NR*_{*16*}*R*_{*17*} or OH
- each R₁: is independently H, C₁-C₄alkyl *or 2-hydroxy-ethyl*
- R₁₀: is Cl, C₁-C₄alkyl, C₁-C₄alkoxy, NHCO-C₁₋₄alkyl, *or when R*_{*9*} *is NO*_{*2*} *and R*_{*1*} *is H or when R*_{*9*} *is NO*_{*2*} *and R*_{*1*} *is CH*_{*3*} *then R*_{*10*} *can be NO*_{*2*}
- *R*_{*11*}: *is H except when R*_{*1*} *and R*_{*9*} *and R*_{*10*} *are CH*_{*3*} *then R*_{*11*} *is CH*_{*3*} *and when R*_{*9*} *and R*_{*10*} *are Cl and R*_{*1*} *is H then R*_{*11*} *is Cl*
- n: is 0 or 1
- X₁ and X₂: independently of each other is an aliphatic, cycloaliphatic, aromatic or heterocyclic amino group, said amino group comprising a protonatable nitrogen atom or a quaternary ammonium group, and being an aliphatic, cycloaliphatic, aromatic or heterocyclic mono(C₁₋₄alkyl)-amino group, the C₁₋₄alkyl- group being unsubstituted or monosubstituted by halogen, C₁₋₄alkyl, C₁₋₄alkoxy, phenyl or hydroxy; an aliphatic, cycloaliphatic, aromatic or heterocyclic di(C₁₋₄alkyl)-amino group, the C₁₋₄alkyl- groups being independently unsubstituted or monosubstituted by halogen, C₁₋₄alkyl, C₁₋₄alkoxy, phenyl or hydroxy; a C₅₋₆cycloalkylamino group, the cycloalkyl group being unsubstituted or substituted by one or two C₁₋₂alkyl groups; a phenylamino group, the phenyl ring being unsubstituted or substituted by one or two groups selected from halogen, C₁₋₄alkyl, C₁₋₄alkoxy, hydroxy and phenoxy; or a 5- or 6-membered ring containing one or two hetero atoms, in addition to N, O or S, which heterocyclic ring is unsubstituted or substituted by one or two C₁₋₄alkyl groups; or a group Z, where Z is independently selected from 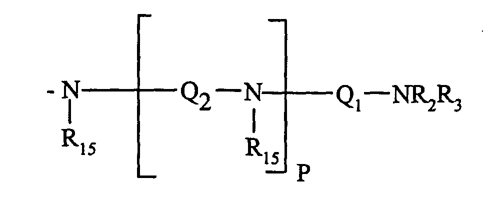 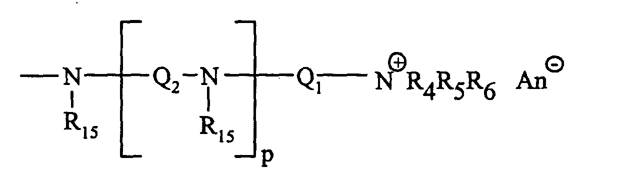 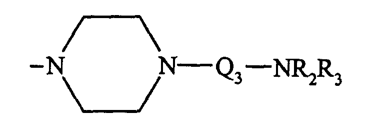 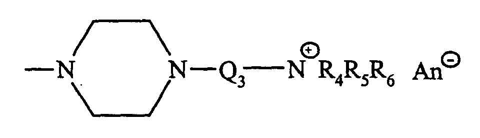 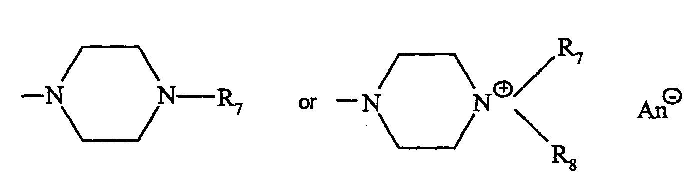 where
p is 0 or an integer 1, 2 or 3,
each R₁₅ is independently hydrogen, unsubstituted C₁₋₄alkyl or C₁₋₄alkyl monosubstituted by hydroxy, halogen, cyano or C₁₋₄alkoxy,
each R₂ and R₃ is independently hydrogen, unsubstituted C₁₋₆alkyl, C₂₋₆alkyl monosubstituted by hydroxy or cyano, phenyl or phenyl-C₁₋₄alkyl, where the phenyl ring of the latter two groups is unsubstituted or substituted by one to three groups selected from chlorine, C₁₋₄alkyl, C₁₋₄alkoxy, unsubstituted C₅₋₆cycloalkyl or C₅₋₆cycloalkyl substituted by one to three C₁₋₄alkyl groups, or a pyridinium ring, or
R₂ and R₃ together with the nitrogen atom to which they are attached, form a 5- or 6-membered ring containing one to three hetero atoms (in addition to N, one or two further N, O or S), which heterocyclic ring is unsubstituted or substituted by one or two C₁₋₄alkyl groups,
each R₄ and R₅ has independently one of significances of R₂ and R₃, except hydrogen
R₆ is C₁₋₄alkyl or benzyl with the exception that R₆ is not benzyl when R₄ and R₅ have one of the cyclic significations of R₂ and R₃ or
R₄, R₅ and R₆ together with the nitrogen atom to which they are attached, form a pyridinium ring which is unsubstituted or substituted by one or two methyl groups,
Q₁ is C₂₋₈alkylene, C₃₋₆alkylene substituted by one or two hydroxy groups, C₁₋₆alkylene-1,3- or 1,4-phenylene, or -*NHCOCH₂, where * denotes the atom bound to -NR₁₅
Q₂ is C₂₋₈alkylene, C₃₋₆alkylene substituted by one or two hydroxy groups, C₁₋₆alkylene-1,3- or -1,4-phenylene or 1,3- or 1,4-phenylene,
Q₃ is C₂₋₈alkylene,
R₇ is hydrogen, unsubstituted C₁₋₆alkyl or C₁₋₆alkyl monosubstituted by hydroxy, cyano, chlorine or phenyl,
R₈ is unsubstituted C₁₋₆alkyl or C₁₋₆alkyl monosubstituted by hydroxy, cyano or chlorine, and
An^{θ} is a non-chromophoric anion;
- R₁₆ and R₁₇: is independently hydrogen, unsubstituted C₁₋₄alkyl, C₁₋₄alkyl monosubstituted by hydroxy or cyano, phenyl or phenyl-C₁₋₄alkyl, where the phenyl ring of the latter two groups is unsubstituted or substituted by one to three groups selected from chlorine, C₁₋₄alkyl, C₁₋₄alkoxy, unsubstituted C₅₋₆cycloalkyl or C₅₋₆cycloalkyl substituted by one to three C₁₋₄alkyl groups, a primary, secondary or tertiary amino-C₁₋₄alkyl group, the alkyl group preferably being propyl, or a pyridine ring, which optionally is substituted
the compounds being in internal or external salt form.

Preferably the compounds of formula I above, are in metal-free form in which n is O or 1. It is preferred that the substituted triazinyl radical is attached to the naphthol radical at the 6 or 7 position. It is also preferred that the sulphonic acid group is attached at the 3-position of the naphthol radical.

Preferably, n is 0.

Any alkyl or alkylene present is linear or branched unless indicated to the contrary. In any hydroxy- or alkoxy-substituted alkyl or alkylene group which is linked to a nitrogen atom, the hydroxy or alkoxy group is bound to a carbon atom other than to the C₁-atom. In any alkylene group substituted by two hydroxy groups, the hydroxy groups are bound to different carbon atoms.

Any alkyl as R₁ preferably contains 1 or 2 carbon atoms, and is more preferably methyl. Any alkyl monosubstituted by hydroxy is preferably linear or branched C₁₋₃alkyl.

R₁ is preferably R₁ₐ, where each R₁ₐ is independently hydrogen, methyl, ethyl or 2-hydroxyethyl.

In a further preferred embodiment of the invention the R₉ and R₁₀ on the phenyl ring attached to the azo group, are independently selected from the group consisting of CH₃, OCH₃, OC₂H₅, Cl, NO₂.

In a more preferred embodiment of the invention, the substitution pattern of the phenyl group is one of the following:

2-nitro-3-chloro-4-sulphonamido, 2,5-dimethyl-sulphonamido, 5-chloro-2-methyl-sulphonamido, 2-methoxy-5-methyl-sulphonamido, 2,5-dimethoxy-sulphonamido, 2,5-dichlorosulphonamido, 2-nitro-5-chloro-4-sulphonamido, 2-ethoxy-5-methyl-4-sulphonamido, 2,6-dimethyl-4-sulphonamido, 2,6-dichloro-4-sulphonamido, 2,6-dinitro-4-sulphonamido, 2,6-dichloro-3-methyl-4-sulphonamido, 2,3,6-trichloro-4-sulphonamido, 2,6-dinitro-3-methyl-4-sulphonamido, 2,3,5,6-tetramethyl-4-sulphonamido, 2,6-dimethyl-3-sulphonamido, 2-chloro-6-methyl-3-sulphonamido, 5,6-dimethyl-3-sulphonamido, 5-methyl-6-chloro-3-sulphonamido, 5-chloro-6-methyl-3-sulphonamido, 5-nitro-6-methyl-3-sulphonamido, 6-chloro-4-methyl-3-sulphonamido, 4-chloro-6-methyl-3-sulphonamido, 4,6-dichloro-3-sulphonamido, 5-nitro-4-methyl-3-sulphonamido, 4-nitro-5-methoxy-3-sulphonamido, 5-chloro-4-methyl-2-sulphonamido, 5-methyl-4-methoxy-2-sulphonamido, 4,5-dimethoxy-2-sulphonamido, 4-chloro-5-methyl-2-sulphonamido, 4-chloro-5-methoxy-2-sulphonamido, 4,5-dichloro-2-sulphonamido, 4,6-dichloro-2-sulphonamido, 4,6-dinitro-2-sulphonamido, 3,5-dimethyl-2-sulphonamido, 3,5-dichloro-2-sulphonamido, 3,4-dichloro-2-sulphonamido, 3,4,5-trichloro-2-sulphonamido, 3,4,6-trichloro-2-sulphonamido.

In a more preferred embodiment of the invention, WO₂S- on the phenyl is a 4-sulphonamido, in a less preferred embodiment it is a 3-sulphonamido and in a still less preferred embodiment, it is a 2-sulphonamido group.

Particularly preferred 4-sulphonamido compounds selected from the above list are any one of the following: 2-nitro-3-chloro-4-sulphonamido, 2,5-dimethyl-sulphonamido, 5-chloro-2-methyl-sulphonamido, 2-methoxy-5-methyl-sulphonamido, 2,5-dimethoxy-sulphonamido, 2,5-dichloro-sulphonamido, 2-nitro-5-chloro-4-sulphonamido and 2-ethoxy-5-methyl-4-sulphonamido.

Where X₁ or X₂ is an aliphatic amino group, such group is preferably a mono(C₁₋₄alkyl)- or di(C₁₋₄alkyl)-amino group in which each alkyl group is independently unsubstituted or monosubstituted by halogen (particularly chlorine or bromine), C₁₋₄alkoxy, phenyl or hydroxy, of which substituents hydroxy is most preferred. Any cycloaliphatic amino group as X₁ or X₂ is preferably a C₅₋₆cycloalkyl-amino group in which the cycloalkyl group is unsubstituted or substituted by one or two C₁₋₂alkyl groups.

Where X₁ or X₂ is an aromatic amino group, such group is preferably a phenylamino group in which the phenyl ring is unsubstituted or substituted by one or two groups selected from halogen (more preferably chlorine), C₁₋₄alkyl, C₁₋₄alkoxy, hydroxy and phenoxy.

Where X₁ or X₂ is a heterocyclic amino group, it is preferably a saturated 5- or 6-membered ring containing one or two hetero atoms (that is in addition to N, O or S), which heterocyclic ring is unsubstituted or substituted by one or two C₁₋₄alkyl groups. More preferably it is a piperidino- or morpholino-group.

Any unsubstituted C₁₋₆alkyl group as R₂ or R₃ is preferably methyl or ethyl. Any substituted C₂₋₆alkyl group as R₂ or R₃ is preferably ethyl or propyl monosubstituted by cyano or hydroxy with the substituent in the 2- or 3-position.

Any phenyl as R₂ or R₃ is preferably unsubstituted. Any phenylalkyl group is preferably benzyl, the phenyl ring of which is preferably unsubstituted. Any cycloalkyl as R₂ or R₃ is preferably cyclohexyl; any alkylsubstituted cycloalkyl is preferably cyclohexyl substituted by one to three methyl groups.

R₂ or R₃ are preferably R₂ₐ or R₃ₐ, where each R₂ₐ or R₃ₐ is independently hydrogen, unsubstituted C₁₋₄alkyl, linear hydroxy-C₂₋₃alkyl, phenyl or benzyl, or a pyridinium ring.

More preferably, R₂ or R₃ are R_{2b} or R_{3b}, where each R_{2b} or R_{3b} is independently hydrogen, unsubstituted C₁₋₄alkyl or 2-hydroxethyl, or a pyridinium ring.

Most preferably, R₂ and R₃ are R_{2c} and R_{3c} respectively, where each R_{2c} and R_{3c} is independently hydrogen, methyl or ethyl.

It is particularly preferred that R₂ and R₃ having a non-cyclic significance are identical groups.

R₄ and R₅ are preferably R₄ₐ and R₅ₐ respectively, where each R₄ₐ and R₅ₐ is independently unsubstituted C₁₋₄alkyl, linear hydroxy-C₂₋₃alkyl or benzoyl, or R₄ₐ and R₅ₐ together with the nitrogen to which they are attached form a piperidine-, morpholine-, piperazine- or N-methyl-piperazine-ring.

More preferably, R₄ and R₅ are R_{4b} and R_{5b} respectively where each R_{4b} and R_{5b} is independently unsubstituted C₁₋₄alkyl or 2-hydroxy-ethyl.

Any alkyl as R₆ is preferably methyl or ethyl, especially methyl.

In a preferred embodiment of the invention, Z above has the meaning Zₐ, wherein each Zₐ is independently a group selected from 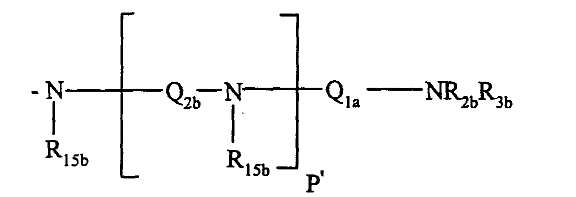 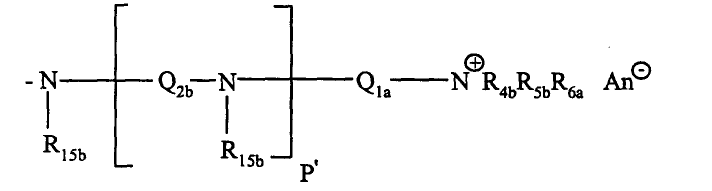 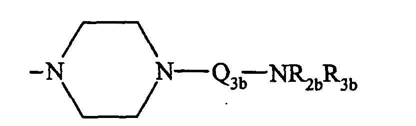 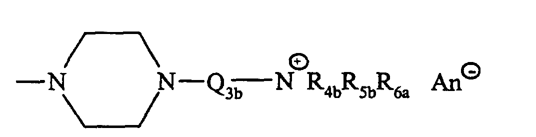 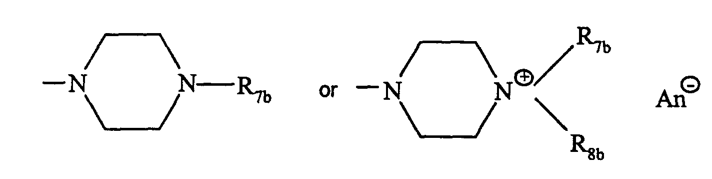 in which
- p': is 0 or 1,
- R_{15b}: is hydrogen, methyl or 2-hydroxyethyl,
- Q₁ₐ: is -*NHCOCH₂-, wherein *denotes the atom bound to -NR_{15b}, unsubstituted C₂₋₆alkylene, monohydroxy-substituted C₃₋₄alkylene, -(CH₂)₁₋₄-1,3- or -1,4-phenylene, or 1,3-or 1,4-phenylene,
- each Q_{2b}: and Q_{3b} is a linear C₂₋₆alkylene group,
- each R_{2b}: and R_{3b} is independently hydrogen, unsubstituted C₁₋₄alkyl or 2-hydroxyethyl, or a pyridinium ring,
- each R_{4b} and R_{5b}: is independently unsubstituted C1-4alkyl or 2-hydroxy-ethyl and R₆ₐ is C₁₋₄alkyl or benzyl or
- R_{4b}, R_{5b} and R₆ₐ: together with the nitrogen to which they are attached form a pyridinium ring which is unsubstituted or substituted by one or two methyl groups,
- R_{7b}: is hydrogen, methyl, ethyl or 2-hydroxyethyl,
- R_{8b}: is methyl, ethyl or 2-hydroxyethyl, and
- An^{θ}: is a non-chromophoric anion.

The present invention further provides a process for the preparation of compounds of formula I comprising reacting the diazonium salt of an amine of formula II, having the following formula: 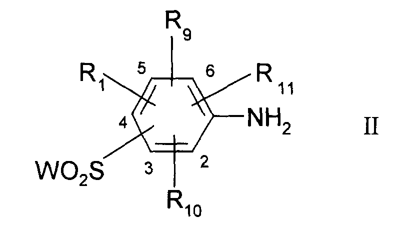 ***in which WO***_{***2***}***S, R***_{***1***}***, R***_{***9***}**, *R***_{***10***}***, and R***_{***11***} are as above defined and preferably being so positioned as above defined, so as to give a preferred compound of Formula I as above disclosed, with a compound of formula III, having the following formula: 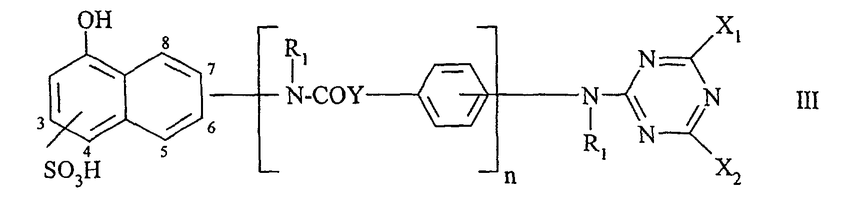 in which R₁, X₁, X₂ and Y are as above defined, with the preference with respect to the positioning of the SO₃H being as above mentioned.

Diazotisation and coupling may be effected in accordance with conventional methods. The coupling reaction advantageously is carried out in an aqueous reaction medium in a temperature range of from 0-60°C, preferably at 20-50°C, and in a pH range of from 3 to 9, preferably at pH 4 to 6. All temperatures are given in degrees Celsius.

A metal-free compound of formula I, in which one of the ortho-positions of the phenyl group with respect to the carbon atom of the > C-N=N-naphthol radical is unsubstituted or substituted by halogen, hydroxy or C₁₋₄alkoxy, may be converted into a 1:1 copper complex in accordance with known methods. This coppering may be carried out by reacting an appropriate metal-free compound of formula I with a copper-donating compound which is employed in such an amount so as to provide at least one equivalent of copper per equivalent of monoazo compound to be metallized.

Suitably, the 1:1 copper complexes may be prepared either by oxidative coppering, preferably at 40-70°C and at pH 4 to 7 in the presence of copper(II) salts, or using copper powder in the presence of hydrogen peroxide or any other conventional oxidizing agents; or preferably by demethylation coppering in the presence of copper(II) salts, preferably at pH 2 to 6 and at elevated to boiling temperature with the addition of metal acetates, or at pH 6 to 11 at elevated to boiling temperature with the addition of an aqueous ammonia solution or an aliphatic amine.

The compounds of formula I thus obtained may be isolated in accordance with known methods.

The compounds (or complexes) of formula I containing free basic groups may be converted wholly or in part into water-soluble salts by reacting with any one of the abovementioned inorganic or organic acids.

The starting compounds, the amines of formula II, are either known or may be prepared in accordance with known methods from available starting materials. The compounds of formula III may be prepared by step-wise replacement of the chlorine atoms of cyanuric chloride whereby in a first and second step, cyanuric chloride is reacted with a diamine of formulae IV and V (as hereinafter defined), respectively, 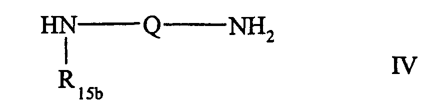 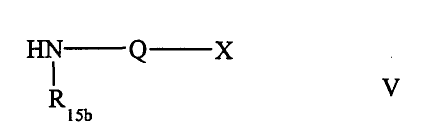 in which R_{15b} is as above defined and Q and X have the following meanings: Q may have any of the meanings of Q₁, Q₂ or Q₃ above; and X has the meaning of X₁.

In the case where identical diamino groups have to be introduced, this first and second steps may be combined into one step. Suitably, the single step is carried out at temperatures of from 0-30°C and preferably at pH 4-6.

Where different diamino groups have to be introduced, suitably, the diamine showing the higher selectivity with respect to the condensation reaction is introduced in the first step at a temperature of preferably 0-20°C more preferably 0-5°C. Both condensation steps may be carried out using the conventional reaction medium where the upper limit of pH is 7. The second step is preferably carried out at 10-40°C, more preferably 12-30°C.

The final third step, the condensation with the aminonaphthol component, is carried out at elevated temperatures in the range of 60-100°C and at pH 2-3.

The starting compounds of formulae IV and V are either known or may be prepared in accordance with known methods from available starting materials.

The compounds and complexes according to the invention, in acid addition salt form or quaternary ammonium salt form, may be used for dyeing cationic dyeable materials such as: homo- or mixed-polymers of acrylonitrile, acid modified polyester or polyamide; wool; leather including low affinity vegetable-tanned leather; cotton; bast fibers such as hemp, flax, sisal, jute, coir and straw; regenerated cellulose fibers, glass or glass products comprising glass fibers; and substrates comprising cellulose for example paper and cotton. They may also be used for printing fibers, filaments and textiles comprising any of the above mentioned materials in accordance with known methods. Printing may be effected by impregnation of the material to be printed with a suitable printing paste comprising one or more compounds of the present invention. The type of printing paste employed, may vary depending on the material to be printed. Choice of a suitable commercially available printing paste or production of a suitable paste, is routine for one skilled in the art. Alternatively the compounds of the present invention may be used in the preparation of inks suitable for example for jet printing, in accordance with conventional methods.

Most preferably, the dyestuffs are used for dyeing or printing of paper e.g., sized or unsized, wood-free or wood-containing paper or paper-based products such as cardboard. They may be used in continuous dyeing in the stock, dyeing in the size press, in a conventional dipping or surface coloring process. The dyeing and printing of paper is effected by known methods.

The dyeings and prints and particularly those obtained on paper, show good fastness properties.

The compounds of formula I may be converted into dyeing preparations. Processing into stable liquid, preferably aqueous, or solid (granulated or powder form) dyeing preparations may take place in a generally known manner. Advantageously suitable liquid dyeing preparations may be made by dissolving the dyestuff in suitable solvents such as mineral acids or organic acids, e.g., hydrochloric acid, sulphuric acid, phosphoric acid, formic acid, acetic acid, lactic acid, glycolic acid, citric acid and methanesulphonic acid. Furthermore formamide, dimtheylformamide, urea, glycols and ethers thereof, dextrin or addition products of boric acid with sorbit may be used together with water, optionally adding an assistant, e.g. a stabilizer. Such preparations may be obtained, for example, as described in French patent specification No. 1,572,030.

The compounds of formula I (in the corresponding salt form) have good solubility especially in cold water. Owing to their high substantivity the compounds of the present invention exhaust practically quantitatively and show a good build-up power. They can be added to the stock directly, i.e. without previously dissolving, as either a dry powder or granulate, without reducing the brilliance or the yield of color. They can also be used in soft water without loss of yield. They do not mottle when applied on paper, are not inclined to give two-sided dyeing on paper and are practically insensitive to filler or pH variations. They operate over a broad pH range, in the range of from pH 3 to 10. When producing sized or unsized paper, the waste water is essentially colorless. This feature, which is extremely important from an environmental view-point, when compared with similar known dyes, shows a marked improvement. A sized paper dyeing when compared with the corresponding unsized paper dyeing does not show any decrease in strength.

The paper dyeings or printings made with the compounds, in particular the metal-free forms, according to the invention are clear and brilliant and have good light fastness: On exposure to light for a long time, the shade of the dyeing fades tone in tone. They show very good wet fastness properties; being fast to water, milk, fruit juice, sweetened mineral water, tonic water, soap and sodium chloride solution, urine etc. Furthermore, they have good alcohol fastness properties. The wet fastness properties are improved compared to known dyes showing otherwise similar properties. They do not exhibit a tendency towards two-sidedness.

Paper dyed or printed with the compounds of the present invention can be bleached either oxidatively or reductively, a feature which is important for the recycling of waste and old paper/paper products. It has surprisingly been found that the dyes of the present invention demonstrate excellent bleachability, particularly when bleaching is carried out reductively. This property, together with the improved backwater results and wet-fastness, shows a marked improvement over known dyes having otherwise similar properties.

The compounds of the present invention may also be used to dye paper containing wood-pulp where even dyeings, having good fastness properties are obtained. Furthermore, they may be used for the production of coated paper in accordance with known methods. Preferably when coating, a suitable filler, for example kaolin, is employed in order to give a one-side coated paper.

The compounds of the present invention are also suitable for dyeing in combination with other dyes for example other cationic or anionic dyes. The compatibility of the compounds of the present invention when used as a dye in mixtures with other commercially available dyes, may be determined according to conventional methods. The thus obtained dyeings have good fastness properties.

The invention further provides a substrate which has been dyed or printed with a compound of the present invention. The substrate may be selected from any of the above mentioned substrates. A preferred substrate is a substrate comprising cellulose such as cotton or paper or paper based product.

The invention further provides a preferred process of dyeing paper comprising the continuous introduction into a stock solution which is being constantly agitated, of a dye of the present invention.

The invention yet further provides use of a compound of the present invention for dyeing or printing any of the abovementioned substrates.

The following Examples further serve to illustrate the invention. In the Examples all parts and all percentages are by weight or volume, and the temperatures given are in degrees Celsius, unless indicated to the contrary.

### EXAMPLE 1

15 parts 1-amino-2-methoxy-5-methylbenzene-4-sulfonamide were dissolved in 200 parts water comprising 20 parts 28% HCl and diazotized at 0-5°C with 50 parts of 10% sodium nitrite solution. 34 parts sodium acetate were added to the solution 1a, which contains the coupling component of formula 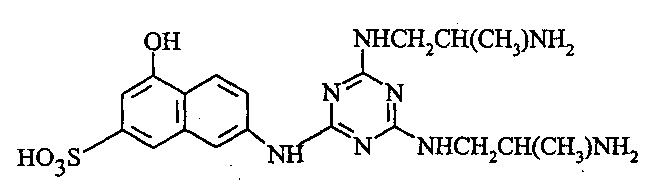 whereby the pH rises to pH 4-5. The diazotizing solution is added thereto and coupling occurs at 5-10°C. The pH is kept at 4.5-5 using strong sodium hydrogen carbonate. After 3 hours it is brought to pH 10 with 30% NaOH and the precipitated dyestuff is filtered off. A dyestuff of the following formula is obtained.

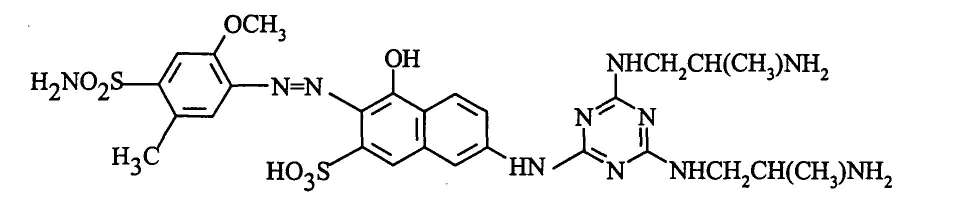

The dyestuff is very soluble in dilute acids, particularly organic acids such as formic acid, lactic acid, acetic acid and methoxyacetic acid. The solution dyes paper in brilliant scarlet nuances. The obtained dye shows excellent light stability and wet fastness (against water, alcohol, milk, soapy water, sodium chloride solution, tonic water, urine etc.) and demonstrates excellent properties with respect to two-sidedness. Furthermore it bleaches very well, either oxidatively or reductively.

### EXAMPLE 1A (PRODUCTION OF COUPLING COMPONENTS

14.8 parts 1,2-Diaminopropane in 100 parts ice water were brought to pH 3-5 with 46 parts 30% HCl. 18 parts cyanuric chloride were added at 0-3°C with good stirring. The pH was kept at 5-5.5 for 5 hours using 53 parts 30% NaOH. The temperature of the reaction solution should at the end, be about 25-30°C. Thereafter 21 parts 2-Amino-5-hydroxynaphthaline-7-sulphic acid were added thereto. The suspension is warmed to 80°C with stirring and kept at a pH of 2-2.5 with 13 parts 30% NaOH. A lightly cloudy solution results. After 1h the reaction is complete.

### EXAMPLE 1B

18.4 parts cyanuric chloride were stirred into 20 parts water and 50 parts ice. Thereafter at a temperature between 0-5°C, 11 parts N-methylpiperazine are added dropwise over 3 h. Stirring is continued for 1 h and thereafter an amine solution of pH 6, comprising 7.4 parts 1,2-Diaminopropane, 40 parts ice and ca. 20 parts 30% HCl is added thereto. The pH is maintained at 6 for a further 5 h, whereby the temperature rises to 25-30°C. Then 21.5 parts 2-amino-5-hydroxynaphthaline-7-sulphonic acid is added. The temperature is brought to 80°C and kept at this temperature for 1 h, the pH being kept at 2-2.5 using *20% Na-carbonate* solution. The resulting solution comprises the following coupling component.

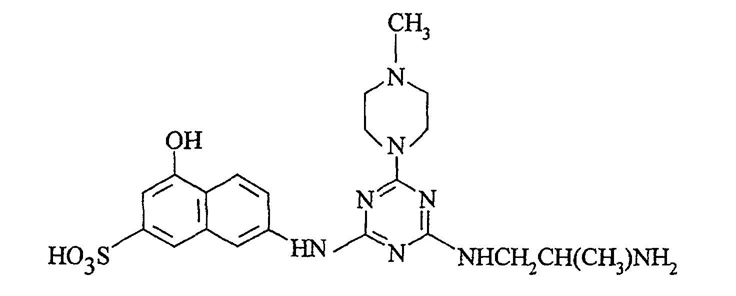

The above coupling component can be used in an analogous manner as in Example 1a above for the production of dyestuffs.

In the following table, several coupling components are given:

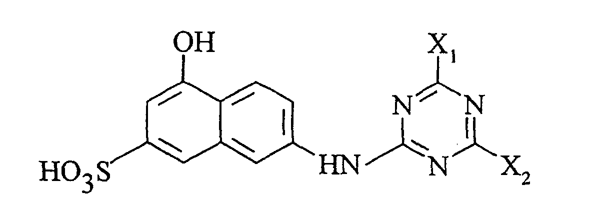

| | **X**_{**1**} | **X**_{**2**} |
|---|---|---|
| 1c | 1,2-Diaminopropane | Dimethylaminopropylamine |
| 1d | 1,2-Diaminopropane | Diethylaminopropylamine |
| 1e | 1,2-Diaminopropane | N-Hydroxyethylpiperazine |
| 1f | 1,2-Diaminopropane | Piperazine |
| 1g | 1,2-Diaminopropane | N-Methylpiperazine |
| 1h | 1,2-Diaminopropane | N-Aminoethylpiperazine |
| 1i | Propylenediamine | Dimethylaminopropylamine |
| 1j | Ethylenediamine | Dimethylaminopropylamine |
| 1k | N-Aminoethylpiperazine | N-Aminoethylpiperazine |
| 1l | N-Methylpiperazine | N-Methylpiperazine |
| 1m | N-Hydroxyethylpiperazine | N-Hydroxyethylpiperazine |
| 1n | N-Hydroxyethylpiperazine | N-Aminoethylpiperazine |
| 1o | N-Hydroxyethylpiperazine | Dimethylaminopropylamine |
| 1p | Dimethylaminopropylamine | Diethylaminopropylamine |
| 1q | Diethylaminopropylamine | Dielylaminopropylamine |
| 1r | Piperazine | Diethylaminopropylamine |

### EXAMPLES 2-16

In an analogous manner as described in Examples 1 and 1a-r, using the appropriate starting material, further compounds of formula I are produced. The compounds have the formula 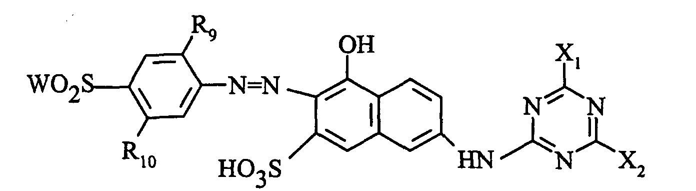 in which the symbols have the meaning given in the following table.

| **No.** | **W** | **R**_{**9**} | **R**_{**10**} | **X**_{**1**} | **X**_{**2**} |
|---|---|---|---|---|---|
| 2 | OH | OCH₃ | CH₃ | NHCH₂CH(CH₃)NH₂ | NHCH₂CH(CH₃)NH₂ |
| 3 | NHCH₃ | OCH₃ | CH₃ | NHCH₂CH(CH₃)NH₂ | HCH₂CH(CH₃)NH₂ |
| 4 | NHC₂H₄OH | OCH₃ | CH₃ | NHCH₂CH(CH₃)NH₂ | NHCH₂CH(CH₃)NH₂ |
| 5 | NHCH₂CH(CH₃)NH₂ | OCH₃ | CH₃ | NHCH₂CH(CH₃)NH₂ | NHCH₂CH(CH₃)NH₂ |
| 6 | NHC₃H₆N(C₂H₅)₂ | OCH₃ | CH₃ | NHCH₂CH(CH₃)NH₂ | NHCH₂CH(CH₃)NH₂ |
| 7 | N(C₂H₄OH)₂ | OCH₃ | CH₃ | NHCH₂CH(CH₃)NH₂ | NHCH₂CH(CH₃)NH₂ |
| 8 | NH₂ | OCH₃ | CH₃ | NHCH₂CH(CH₃)NH₂ | NHC₃H₆N(C₂H₅)₂ |
| 9 | NH₂ | OCH₃ | CH₃ | NHC₃H₆N(C₂H₅)₂ | NHC₃H₆N(C₂H₅)₂ |
| 10 | OH | OCH₃ | CH₃ | NHC₃H₆N(C₂H₅)₂ | NHC₃H₆N(C₂H₅)₂ |
| 11 | NH₂ | CH₃ | CH₃ | NHCH₂CH(CH₃)NH₂ | NHCH₂CH(CH₃)NH₂ |
| 12 | NH₂ | OCH₃ | NHCOCH₃ | NHCH₂CH(CH₃)NH₂ | NHCH₂CH(CH₃)NH₂ |
| 13 | OH | CH₃ | CH₃ | NHCH₂CH(CH₃)NH₂ | NHCH₂CH(CH₃)NH₂ |
| 14 | NH₂ | OCH₃ | OCH₃ | NHCH₂CH(CH₃)NH₂ | NHCH₂CH(CH₃)NH₂ |
| 15 | NH₂ | OCH₃ | OCH₃ | NHC₃H₆N(C₂H₅)₂ | NHC₃H₆N(C₂H₅)₂ |
| 16 | OH | OCH₃ | OCH₃ | NHC₃H₆N(C₂H₅)₂ | NHC₃H₆N(C₂H₅)₂ |

### EXAMPLE 17

18.4 parts cyanuric chloride were stirred into 20 parts water and 50 parts ice. Thereafter at a temperature of 0-5°C, 26 parts Diethylaminopropylamine are added drop-wise over a period of 3 h. Stirring is continued for 1 h and then the temperature is allowed to rise to 25-30°C. Stirring is continued for a further 5 h at pH 6. Thereafter 70 parts 2-(3'-aminobenzoyl)-amino-5-hydroxynapthaline-7-sulphonic acid are added. The temperature is brought to 80°C and held at this temperature for 1 h, the pH being kept at 2-2.5 using 20% Na-carbonate solution. This solution comprises the coupling component having the following formula 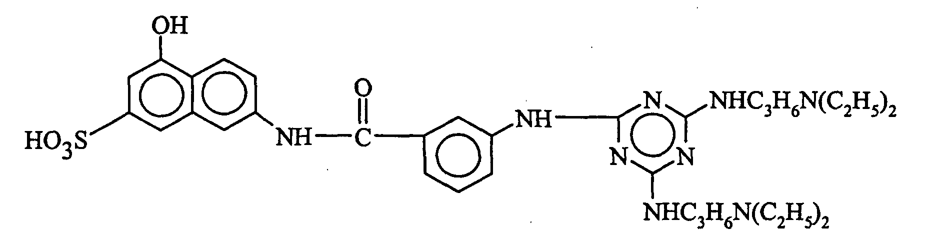 20 parts diazotised 1-amino-2-methoxy-5-methylbenzene-4-sulphonic acid are added thereto and coupled at pH 4-4.5. After 2 h the pH is brought to pH 9 with 30% NaOH and the precipitated dyestuff is filtered off. A dyestuff of the following formula is obtained

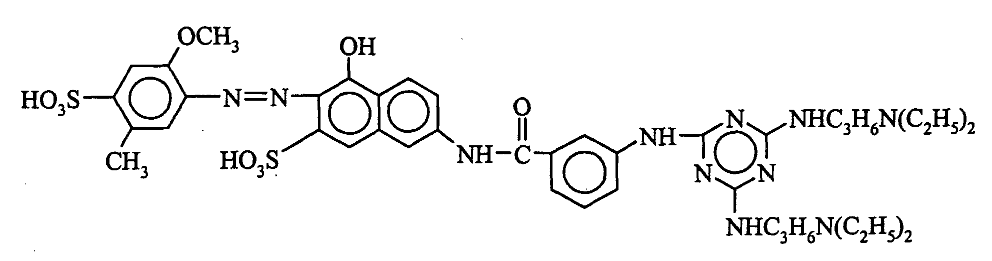

This dyestuff shows very good solubility in dilute acids, especially formic acid. The solution dyes paper in brilliant, neutral red tones. The dyeings obtained show excellent light and wet fastness. Bleachability is perfect.

### EXAMPLE 18

Proceeding according to example 17, using however 1,2-diaminopropane and 1-amino-2-methoxy-5-methylbenzene-4-sulfonamide in the place of 1-amino-2-methoxy-5-methylbenzene-4-sulphonic acid and diethylaminopropylamine a dyestuff of the following formula is obtained:

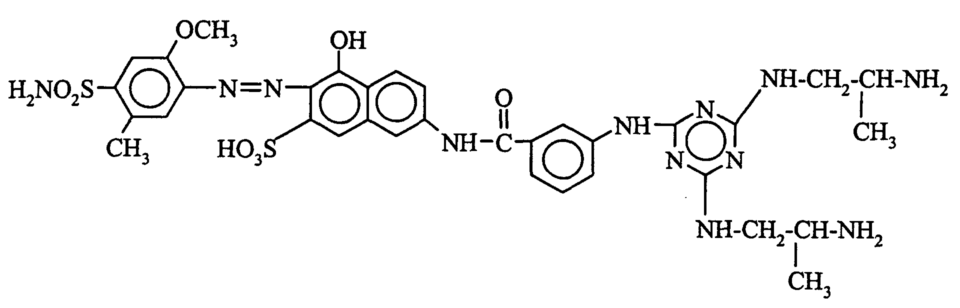

This dyestuff is very soluble in dilute acids. It dyes paper in brilliant scarlet tones. The fastness properties of the paper are excellent.

### EXAMPLE 19

The wet press-cake obtained according to Example 1 after filtration, containing ca. 65 parts pure dyestuff, is stirred into 500 parts water and 20 parts formic acid. The dyestuff dissolves completely. The dyestuff solution is evaporated to dryness and a dyestuff in powder form having the formula indicated in Example 1 is obtained. It dissolves excellently in cold water. Other organic acids such as lactic, acetic or methoxyacetic acid or mixtures thereof can be used instead of formic acid for salt formation.

### EXAMPLE 20

The wet press-cake obtained according to Example 1 is added to 40 parts lactic acid and 250 parts water and is dissolved by warming to 50°C. Finally with the help of a filter aid it is clear filtered and made up to 450 parts. A viscous dyestuff solution is obtained which is storable at room temperature for several months and can be used directly or after diluting with water to dye paper in scarlet red nuances.

### APPLICATION EXAMPLE A

70 parts chemically bleached sulphite cellulose obtained from pinewood and 30 parts chemically bleached cellulose obtained from birchwood are beaten in 2000 parts water in a Hollander. 0.2 parts of the dyestuff of example 1 are sprinkled into this pulp or 2 parts of the wet dye preparation of example 20 are added thereto. After mixing for 10 mins, paper is produced from this pulp. The absorbent paper obtained in this way is dyed a brilliant scarlet red. The waste water is colorless.

### APPLICATION EXAMPLE B

0.2 parts of the dyestuff powder according to Example 1, were dissolved in 100 parts hot water and cooled to room temperature. The solution is added to 100 parts chemically bleached sulphite cellulose which have been ground with 2000 parts water in a Hollander. After 15 minutes thorough mixing resin size and aluminium sulfate are added thereto. Paper produced in this way has a brilliant scarlet red nuance and exhibits perfect light and wet fastness.

### APPLICATION EXAMPLE C

An absorbent length of unsized paper is drawn at 40-50°C through a dyestuff solution having the following composition:

| | | |
|---|---|---|
| 0.3 | parts | of the dyestuff according to Example 1 |
| 0.5 | parts | of starch and |
| 99.0 | parts | of water. |

The excess dyestuff solution is squeezed out through two rollers. The dried length of paper is dyed in a brilliant scarlet red shade.

The dyestuffs of Examples 2 to 19 may also be used for dyeing by a method analogous to that of Application Examples A to C. The paper dyeings obtained show good fastness properties.

### APPLICATION EXAMPLE D

0.2 Parts of the dyestuff of Example 1 in acid addition salt form are dissolved in 4000 part of demineralised water at 40°C. 100 Parts of a pre-wetted cotton textile substrate are added, and the bath is raised to the boiling point over 30 minutes and held at the boil for one hour. Any water which evaporates during dyeing is replaced continuously. The dyed substrate is removed form the bath, and after rinsing and drying, a brilliant scarlet red dyeing is obtained having good light and wet fastness properties. The dyestuff exhausts practically totally onto the fiber, and the waste water is almost colorless.

In a similar manner as described in Application Example D the dyestuffs according to Examples 2-19 may be used for dyeing cotton.

### APPLICATION EXAMPLE E

100 parts freshly tanned and neutralized chrome leather are agitated for 30 minutes in a vessel with a liquor consisting of 250 parts of water at 55°C and 0.5 parts of the dyestuff of Example 1 in acid addition salt form, and then treated in the same bath for 30 minutes with 2 parts of an anionic fatty licker based on sulphonated train oil. The leather is then dried and prepared in the normal way, giving a leather evenly dyed in a brilliant scarlet red shade.

By a method analogous to that described in Application Example E the dyestuffs according to Examples 2-19 may be used for dyeing leather.

Further vegetable-tanned leathers of low affinity may be dyed using the dyestuffs as described herein in accordance with known methods.

### APPLICATION EXAMPLE F

Water is added to a dry pulp in Hollander consisting of 60% (by weight) of mechanical wood pulp and 40% (by weight) of unbleached sulphite cellulose, and the slurry is beaten in order to obtain a dry content slightly exceeding 2.5% and having a beating degree of 40° SR (degrees Schopper-Riegler). The slurry is then exactly adjusted to a high density dry content of 2.5% by adding water.

5 Parts of a 2.5% aqueous solution of the dyestuff according to Example 1 are added to 200 parts of the above resulting slurry. The mixture is stirred for about 5 minutes and, after the addition of 2% (by weight) resin size and then 4% (by weight) alum (based on the dry weight) is further stirred for a few minutes until homogeneous. The resulting pulp is diluted with about 500 parts water to a volume of 700 parts and then used for the production of paper sheets by suction on a sheet former. The resulting paper sheets are dyed in a brilliant scarlet red.

By a method analogous to that described in Application Example F any one of the dyestuffs of Examples 2-19 may be used instead of that of Example 1. In all cases, the waste water exhibits a substantially low residual dye concentration.

### APPLICATION EXAMPLE G

Water is added to a dry pulp in a Hollander consisting of 50% (by weight) of chemically bleached sulphite cellulose obtained from pinewood and 50% (by weight) of chemically bleached sulphite cellulose obtained from birchwood, and the slurry is ground until a degree of grinding of 35° SR is reached. The slurry is then adjusted to a high density dry content of 2.5% by adding water, and the pH of this suspension is adjusted to 7.

10 Parts of a 0.5% aqueous solution of the dyestuff mixture adjusted according to Example are added to 200 parts of the above resulting slurry, and the mixture is stirred for 5 minutes. The resulting pulp is diluted with 500 parts water and then used for the production of sheets by suction on a sheet former. The paper sheets thus obtained have a brilliant blue shade.

By a method analogous to that described in Application Example G further dye mixtures may be used consisting of any one of the dyestuffs of Examples 2-19. In all cases, paper sheets are formed having a brilliant scarlet red shade.

## Claims

1. A compound of Formula I 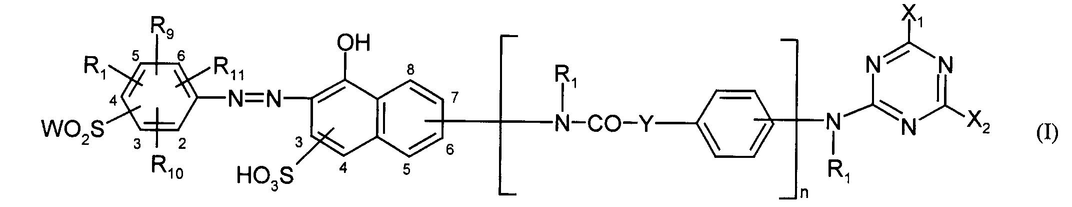 wherein
W is OH or NR₁₃R₁₄
Y is NH or a direct bond
R₉ is OH, Cl, C₁-C₄alkyl, C₂-C₄hydroxyalkyl, C₂-C₄hydroxyalkoxy, NH₂, NO₂, COOH, COO(C₁-C₄alkyl), SO₂NR₁₃R₁₄, SO₂OR₁, C₁-C₄alkoxy
R₁₃ is H, phenyl, cycloalkyl or C₁-C₆alkyl optionally substituted by NR₁₆R₁₇ or OH;
R₁₄ is H, C₁-C₆alkyl, optionally substituted by *NR*_{*16*}*R*_{*17*} or OH
each R₁ is independently H, C₁-C₄alkyl *or 2-hydroxy-ethyl*
R₁₀ is Cl, C₁-C₄alkyl, C₁-C₄alkoxy, NHCO-C₁₋₄alkyl, *or when R*_{*9*} *is NO*_{*2*} *and R*_{*1*} *is H or when R*_{*9*} *is NO*_{*2*} *and R*_{*1*} *is CH*_{*3*} *then R*_{*10*} *can be NO*_{*2*}
*R*_{*11*} *is H with the exeption when R*_{*1*} *and R*_{*9*} *and R*_{*10*} *are CH*_{*3*} *then R*_{*11*} *is CH*_{*3*} *and when R*_{*9*} *and R*_{*10*} *are Cl and R*_{*1*} *is H then R*_{*11*} *is Cl*
n is 0 or 1
X₁ and X₂ independently of each other is an aliphatic, cycloaliphatic, aromatic or heterocyclic amino group, said amino group comprising a protonatable nitrogen atom or a quaternary ammonium group, and being an aliphatic, cycloaliphatic, aromatic or heterocyclic mono(C₁₋₄alkyl)-amino group, the C₁₋₄alkyl- group being unsubstituted or monosubstituted by halogen, C₁₋₄alkyl, C₁₋₄alkoxy, phenyl or hydroxy; an aliphatic, cycloaliphatic, aromatic or heterocyclic di(C₁₋₄alkyl)-amino group, the C₁₋₄alkyl- groups being independently unsubstituted or monosubstituted by halogen, C₁₋₄ alkyl, C₁₋₄ alkoxy, phenyl or hydroxy; a C₅₋₆ cycloalkylamino group, the cycloalkyl group being unsubstituted or substituted by one or two C₁₋₂alkyl groups; a phenylamino group, the phenyl ring being unsubstituted or substituted by one or two groups selected from halogen, C₁₋₄alkyl, C₁₋₄alkoxy, hydroxy and phenoxy; or a 5- or 6-membered ring containing one or two hetero atoms, in addition to N, O or S, which heterocyclic ring is unsubstituted or substituted by one or two C₁₋₄alkyl groups; or a group Z, where Z is independently selected from 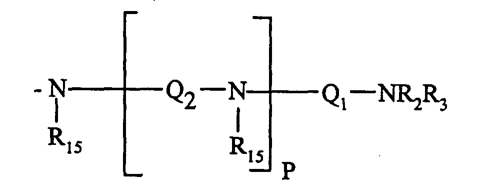 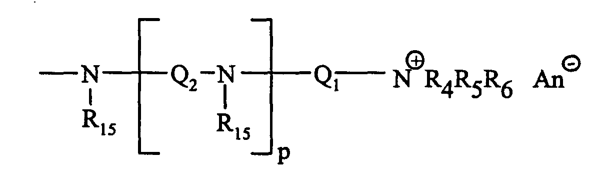 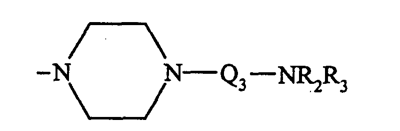 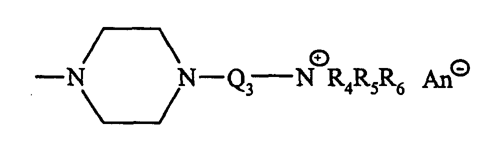 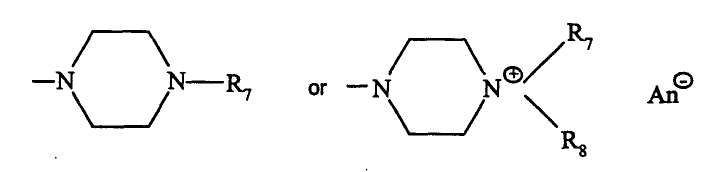 where
p is 0 or an integer 1, 2 or 3,
each R₁₅ is independently hydrogen, unsubstituted C₁₋₄alkyl or C₁₋₄alkyl monosubstituted by hydroxy, halogen, cyano or C₁₋₄alkoxy,
each R₂ and R₃ is independently hydrogen, unsubstituted C₁₋₆alkyl, C₂₋₆alkyl monosubstituted by hydroxy or cyano, phenyl or phenyl-C₁₋₄alkyl, where the phenyl ring of the latter two groups is unsubstituted or substituted by one to three groups selected from chlorine, C₁₋₄alkyl, C₁₋₄alkoxy, unsubstituted C₅₋₆cycloalkyl or C₅₋₆cycloalkyl substituted by one to three C₁₋₄alkyl groups, or a pyridinium ring, or
R₂ and R₃ together with the nitrogen atom to which they are attached, form a 5- or 6-membered ring containing one to three hetero atoms (in addition to N, one or two further N, O or S), which heterocyclic ring is unsubstituted or substituted by one or two C₁₋₄alkyl groups,
each R₄ and R₅ has independently one of significances of R₂ and R₃, except hydrogen
R₆ is C₁₋₄alkyl or benzyl with the exception that R₆ is not benzyl when R₄ and R₅ have one of the cyclic significations of R₂ and R₃ or
R₄, R₅ and R₆ together with the nitrogen atom to which they are attached, form a pyridinium ring which is unsubstituted or substituted by one or two methyl groups,
Q₁ is C₂₋₈alkylene, C₃₋₆alkylene substituted by one or two hydroxy groups, C₁₋₆alkylene-1,3- or 1,4-phenylene, or -*NHCOCH₂, where * denotes the atom bound to -NR₁₅
Q₂ is C₂₋₈alkylene, C₃₋₆alkylene substituted by one or two hydroxy groups, C₁₋₆alkylene-1,3- or -1,4-phenylene or 1,3- or 1,4-phenylene,
Q₃ is C₂₋₈alkylene,
R₇ is hydrogen, unsubstituted C₁₋₆alkyl or C₁₋₆alkyl monosubstituted by hydroxy, cyano, chlorine or phenyl,
R₈ is unsubstituted C₁₋₆alkyl or C₁₋₆alkyl monosubstituted by hydroxy, cyano or chlorine, and
An^{θ} is a non-chromophoric anion;
R₁₆ and R₁₇ is independently hydrogen, unsubstituted C₁₋₄alkyl, C₁₋₄alkyl monosubstituted by hydroxy or cyano, phenyl or phenyl-C₁₋₄alkyl, where the phenyl ring of the latter two groups is unsubstituted or substituted by one to three groups selected from chlorine, C₁₋₄alkyl, C₁₋₄alkoxy, unsubstituted C₅₋₆cycloalkyl or C₅₋₆cycloalkyl substituted by one to three C₁₋₄alkyl groups, a primary, secondary or tertiary amino-C₁₋₄alkyl group, the alkyl group preferably being propyl, or a pyridine ring, which optionally is substituted,
the compounds being in internal or external salt form.

2. A compound according to Claim 1, wherein n is 0.

3. A compound according to either Claim 1 or 2, wherein R₁ is R₁ₐ, each R₁ₐ independently being hydrogen, methyl, ethyl or 2-hydroxy-ethyl.

4. A compound according to any one of the preceding claims, wherein the R₉ and R₁₀ on the phenyl ring attached to the azo group, are independently selected from the group consisting of CH₃, OCH₃, OC₂H₅, Cl, NO₂.

5. A compound according to any one of the preceding claims, wherein each group X₁ and X₂ is a group Zₐ, wherein each Zₐ is independently a group selected from 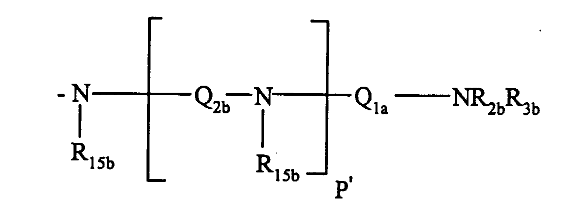 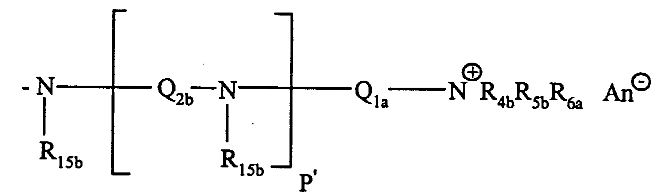 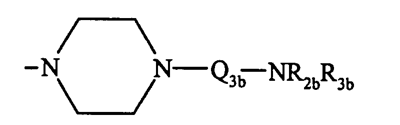 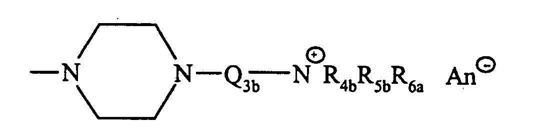 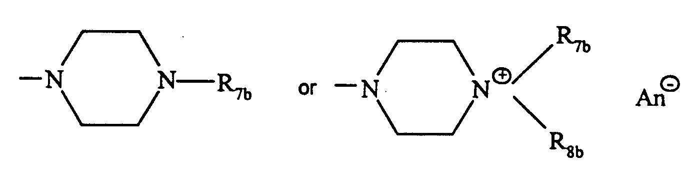 in which
p' is 0 or 1,
R_{15b} is hydrogen, methyl or 2-hydroxyethyl,
Q₁ₐ is -*NHCOCH₂-, wherein *denotes the atom bound to -NR_{15b}, unsubstituted C₂₋₆alkylene, monohydroxy-substituted C₃₋₄alkylene, -(CH₂)₁₋₄-1,3- or -1,4-phenylene, or 1,3-or 1,4-phenylene,
each Q_{2b} and Q_{3b} is a linear C₂₋₆alkylene group,
each R_{2b} and R_{3b} is independently hydrogen, unsubstituted C₁₋₄alkyl or 2-hydroxethyl, or a pyridinium ring,
each R_{4b} and R_{5b} is independently unsubstituted C1-4alkyl or 2-hydroxy-ethyl and R₆ₐ is C₁₋₄alkyl or benzyl or
R_{4b}, R_{5b} and R₆ₐ together with the nitrogen to which they are attached form a pyridinium ring which is unsubstituted or substituted by one or two methyl groups,
R_{7b} is hydrogen, methyl, ethyl or 2-hydroxyethyl,
R_{8b} is methyl, ethyl or 2-hydroxyethyl, and
An^{θ} is a non-chromophoric anion.

6. A composition comprising a compound as claimed in any one of claims 1 to 5.

7. A substrate which has been dyed or printed with a compound as claimed in any one of claims 1 to 5 or a composition as claimed in claim 6.

8. Use of a compound as claimed in any one of claims 1 to 5 or a composition as claimed in claim 6 for dyeing or printing.

9. A process for the preparation of a compound of formula I as claimed in claim 1 comprising reacting the diazonium salt of an amine of formula II, having the following formula: 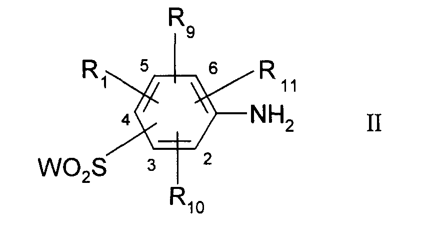 with a compound of formula III, having the following formula: 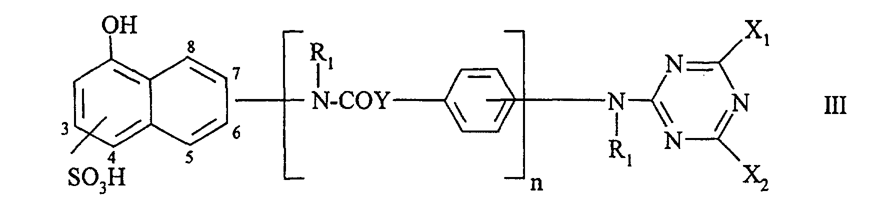 in which ***WO***_{***2***}***S, R***_{***1***}***, R***_{***9***}***, R***_{***10***}***, R***_{***11***}***, Y, X***_{***1***} ***and X***_{***2***} are as defined in claim 1.

## Patentansprüche

1. Eine Verbindung der Formel I 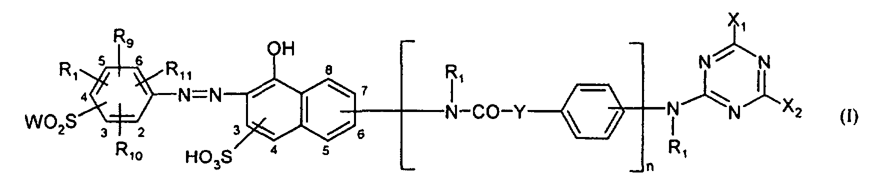 worin
W für OH oder NR₁₃R₁₄ steht;
Y NH oder eine direkte Bindung bedeutet;
R₉ für OH, Cl, C₁-C₄Alkyl, C₂-C₄Hydroxyalkyl, C₂-C₄Hydroxyalkoxy, NH₂, NO₂, COOH, COO(C₁-C₄alkyl), SO₂NR₁₃R₁₄, SO₂OR₁, C₁-C₄Alkoxy steht;
R₁₃ H, Phenyl, Cycloalkyl oder C₁-C₆Alkyl bedeutet, welches gegebenenfalls durch NR₁₆R₁₇ oder OH substituiert ist;
R₁₄ für H, C₁-C₆Alkyl steht, welches gegebenenfalls durch NR₁₆R₁₇ oder OH substituiert ist;
jedes R₁ unabhängig voneinander H, C₁-C₄Alkyl oder 2-Hydroxyethyl bedeutet
R₁₀ für Cl, C₁-C₄Alkyl, C₁-C₄Alkoxy, NHCO-C₁-₄alkyl steht oder wenn R₉ NO₂ und R₁ H bedeuten oder wenn R₉ NO₂ und R₁ CH₃ bedeuten, dann kann R₁₀ für NO₂ stehen;
R₁₁ H bedeutet mit der Ausnahme, dass falls R₁ und R₉ und R₁₀ CH₃ bedeuten, dann steht R₁₁ für CH₃ und wenn R₉ und R₁₀ Cl und R₁ H bedeuten, dann steht R₁₁ für Cl;
n 0 oder 1 ist;
X₁ und X₂ unabhängig voneinander eine aliphatische, cycloaliphatische, aromatische oder heterocyclische Amino Gruppe bedeuten, wobei die Amino Gruppe ein protonisierbares Stickstoffatom oder eine quaternäre Amino Gruppe enthält, wobei falls sie eine aliphatische, cycloaliphatische, aromatische oder heterocyclische Mono(C₁-₄alkyl)-amino Gruppe bedeuten, die C₁-₄Alkyl Gruppe unsubstituiert oder durch Halogen, C₁-₄Alkyl, C₁-₄Alkoxy, Phenyl oder Hydroxy monosubstituiert ist; falls sie eine aliphatische, cycloaliphatische, aromatische oder heterocyclische Di(C₁-₄alkyl)-amino Gruppe bedeuten, die C₁-₄Alkyl Gruppen unabhängig voneinander unsubstituiert oder durch Halogen, C₁-₄Alkyl, C₁-₄Alkoxy, Phenyl oder Hydroxy monosubstituiert sind; falls sie eine C₅-₆Cycloalkylamino Gruppe bedeuten, die Cycloalkyl Gruppe unsubstituiert oder durch eine oder zwei C₁-₂Alkyl Gruppen substituiert ist; falls sie eine Phenylamino Gruppe bedeuten, der Phenyl Ring unsubstituiert oder durch eine oder zwei Gruppen substituiert ist, welche aus Halogen, C₁-₄ Alkyl, C₁-₄Alkoxy, Hydroxy und Phenoxy ausgewählt sind; oder falls sie einen 5- oder 6-gliedrigen Ring bedeuten, welcher zusätzlich zu N, O oder S ein oder zwei Heteroatome besitzt, der heterocyclische Ring unsubstituiert oder durch eine oder zwei C₁-₄Alkyl Gruppen substituiert ist; oder falls sie eine Gruppe Z bedeuten, Z unabhängig ausgewählt ist aus 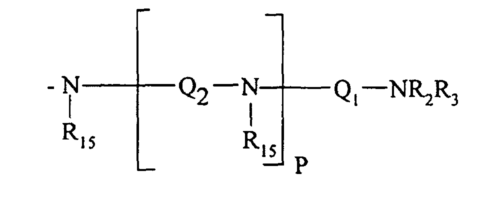 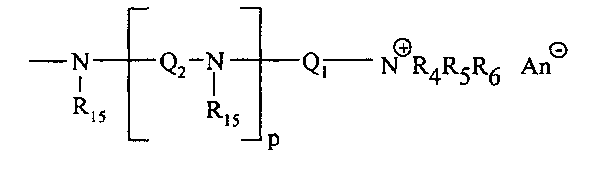 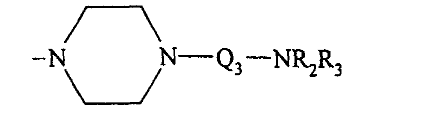 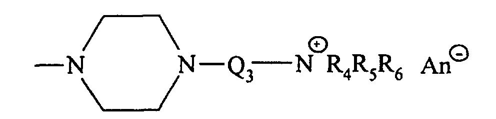 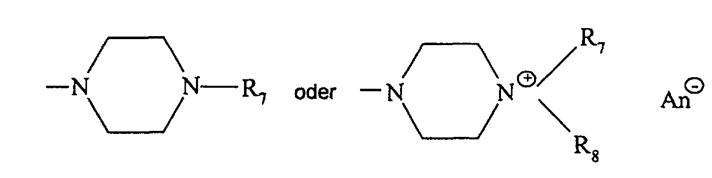 worin
p 0 oder eine ganze Zahl 1,2 oder 3 ist
jedes R₁₅ unabhängig voneinander Wasserstoff, ein unsubstituiertes C₁-₄Alkyl oder ein durch Hydroxy, Halogen, Cyano oder C₁-₄Alkoxy monosubstituiertes C₁-₄Alkyl bedeutet,
jedes R₂ und R₃ unabhängig voneinander Wasserstoff, ein unsubstituiertes C₁-₆Alkyl, ein durch Hydroxy oder Cyano, Phenyl oder Phenyl-C₁-₄alkyl monosubstituiertes C₂-₆Alkyl bedeutet, wobei der Phenyl Ring der beiden letzteren Gruppen unsubstituiert oder durch eine bis drei Gruppen substituiert ist, welche aus Chlor, C₁-₄Alkyl, C₁-₄Alkoxy, einem unsubstituierten C₅-₆Cycloalkyl oder einem durch eine bis drei C₁-₄Alkyl Gruppen substituiertem C₅-₆Cycloalkyl ausgewählt sind oder einen Pyridinium Ring bedeutet, oder
R₂ und R₃ zusammen mit dem Stickstoffatom an das sie gebunden sind einen 5 oder 6 gliedrigen Ring bilden, welcher ein bis drei Heteroatome (zusätzlich zu N, einem oder zwei weiteren N, O oder S) besitzt, wobei der heterocyclische Ring unsubstituiert oder durch eine oder zwei C₁-₄Alkyl Gruppen substituiert ist,
jedes R₄ und R₅ unabhängig voneinander eine der Bedeutungen von R₂ und R₃ mit Ausnahme derjenigen von Wasserstoff besitzt,
R₆ für C₁-₄Alkyl oder Benzyl steht mit der Ausnahme, dass R₆ nicht Benzyl bedeutet, wenn R₄ und R₅ eine der cyclischen Bedeutungen von R₂ und R₃ besitzen
R₄, R₅ und R₆ zusammen mit dem Stickstoffatom an das sie gebunden sind einen Pyridinium Ring bilden, welcher unsubstituiert oder durch eine oder zwei Methyl Gruppen substituiert ist,
Q₁ für C₂-₈Alkylen, C₃-₆Alkylen, welches durch eine oder zwei Hydroxyl Gruppen substituiert ist, C₁-₆Alkylen-1,3- oder -1,4-Phenylen oder -*NHCOCH₂, worin * die Atombindung an -NR₁₅ bedeutet, steht,
Q₂ für C₂-₈Alkylen, C₃-₆Alkylen, welches durch eine oder zwei Hydroxyl Gruppen substituiert ist, C₁-₆Alkylen-1,3- oder-1,4-Phenylen oder 1,3- oder 1,4-Phenylen steht,
Q₃ C₂-₈Alkylen bedeutet,
R₇ für Wasserstoff, ein unsubstituiertes C₁-₆Alkyl oder ein C₁-₆Alkyl steht, welches durch Hydroxy, Cyano, Chlor oder Phenyl monosubstituiert ist,
R₈ ein unsubstituiertes C₁-₆Alkyl oder ein C₁-₆Alkyl bedeutet, welches durch Hydroxy, Cyano oder Chlor monosubstituiert ist, und
An^{⊖} für ein nicht-chromophores Anion steht
R₁₆ und R₁₇ unabhängig voneinander Wasserstoff, ein unsubstituiertes C₁-₄Alkyl, ein C₁-₄Alkyl, welches durch Hydroxy, oder Cyano, Phenyl oder Phenyl-C₁-₄-alkyl monosubstituiert ist, wobei der Phenyl Ring der beiden letzteren Gruppen unsubstituiert oder durch eine bis drei Gruppen substituiert ist, welche aus Chlor, C₁-₄Alkyl, C₁-₄Alkoxy, einem unsubstituierten C₅-₆Cycloalkyl oder einem C₅-₆Cycloalkyl, welches durch eine bis drei C₁-₄Alkyl Gruppen substituiert ist, ausgewählt sind, eine primäre, sekundäre oder tertiäre Amino-C₁-₄alkyl Gruppe, wobei die Alkyl Gruppe vorzugsweise Propyl bedeutet oder einen gegebenenfalls substituierten Pyridin Ring bedeuten,
die Verbindungen befinden sich in innerer oder äusserer Salzform.

2. Eine Verbindung gemäss Patentanspruch 1, worin n 0 ist.

3. Eine Verbindung gemäss entweder Patentanspruch 1 oder 2, worin R₁ für R₁ₐ steht, jedes R₁ₐ unabhängig Wasserstoff, Methyl, Ethyl oder 2-Hydroxyethyl bedeutet.

4. Eine Verbindung gemäss einem der vorhergehenden Patentansprüche, worin die Substituenten R₉ und R₁₀ auf dem Phenylring, welcher an die Stickstoff Gruppe gebunden ist unabhängig voneinander ausgewählt sind aus der Gruppe bestehend aus CH₃, OCH₃, OC₂H₅, Cl, NO₂.

5. Eine Verbindung gemäss einem der vorhergehenden Patentansprüche, worin jede Gruppe X₁ und X₂ eine Gruppe Zₐ ist, worin jedes Zₐ unabhängig voneinander eine Gruppe bedeutet, welche ausgewählt ist aus 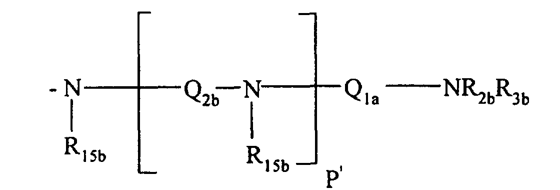 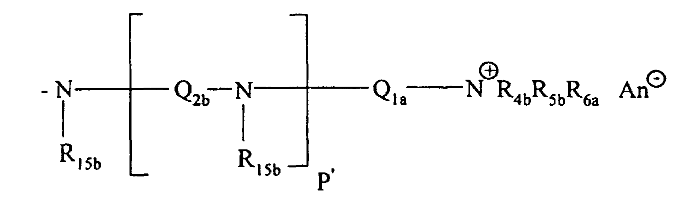 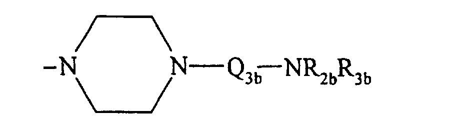 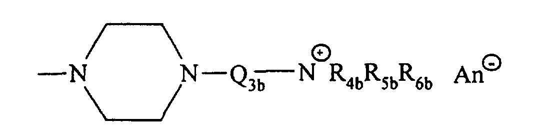 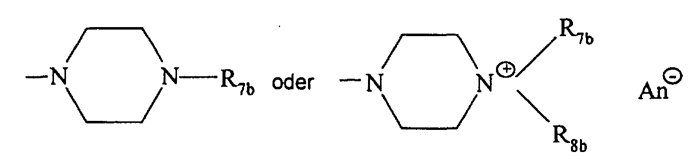 worin
P' 0 oder 1 bedeutet,
R_{15b} für Wasserstoff, Methyl oder 2-Hydroxyethyl steht,
Q₁ₐ -*NHCOCH₂- bedeutet, worin * die Atom Bindung an -NR_{15b} angibt, unsubstituiertes C₂-₆Alkylen, Monohydroxy substituiertes C₃-₄Alkylen, -(CH₂)₁-₄-1,3- oder - 1,4-Phenylen oder 1,3- oder 1,4-Phenylen bedeutet,
jedes Q_{2b} und Q_{3b} für eine geradekettige C₂-₆Alkylen Gruppe stehen,
jedes R2b und R_{3b} unabhängig voneinander Wasserstoff, ein unsubstituiertes C₁₋₄Alkyl oder 2-Hydroxyethyl oder einen Pyridinium Ring bedeuten,
jedes R_{4b} und R_{5b} unabhängig voneinander für ein unsubstituiertes C₁-₄Alkyl oder 2-Hydroxyethyl und R₆ₐ für C₁-₄Alkyl oder Benzyl stehen oder
R_{4b},R_{5b} und R₆ₐ zusammen mit dem Stickstoffatom, an das sie gebunden sind einen Pyridinium Ring bilden, welcher unsubstituiert oder durch eine oder zwei Methyl Gruppen substituiert ist,
R_{7b} Wasserstoff, Methyl, Ethyl oder 2-Hydroxyethyl bedeutet,
R_{8b} für Methyl, Ethyl oder 2-Hydroxyethyl steht, und
An^{⊖} ein nicht-chromophores Anion bedeutet.

6. Eine Zusammensetzung enthaltend eine Verbindung, die in einem der Patentansprüche 1 bis 5 beansprucht wird.

7. Ein Substrat, welches gefärbt oder bedruckt wurde mit einer Verbindung, die in einem der Patentansprüche 1 bis 5 beansprucht wird oder einer Zusammensetzung, die im Patentanspruch 6 beansprucht wird.

8. Verwendung einer Verbindung, die in einem der Patentansprüche 1 bis 5 beansprucht wird oder einer Zusammensetzung, die im Patentanspruch 6 beansprucht wird, zum Färben oder Bedrucken.

9. Ein Verfahren zur Herstellung einer Verbindung der Formel I, die im Patentanspruch 1 beansprucht wird, welches die Umsetzung des Diazoniumsalzes eines Amins der Formel II, welches die folgende Formel besitzt: 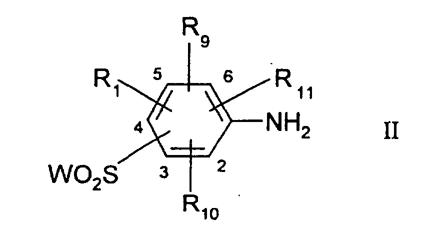 mit einer Verbindung der Formel III, welche die folgende Formel besitzt 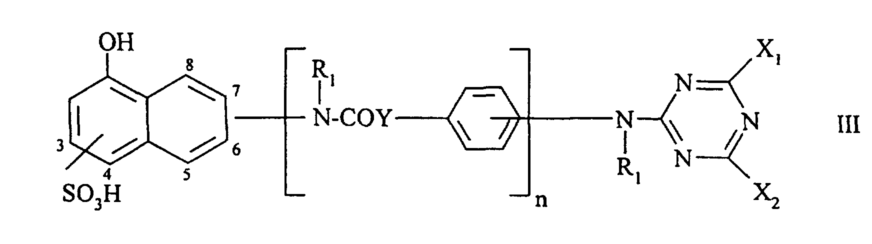 worin WO₂S, R₁, R₉, R₁₀, R₁₁, Y, X₁, und X₂ die im Patentanspruch 1 angegebene Bedeutung besitzen, umfasst.

## Revendications

1. Un composé de formule I 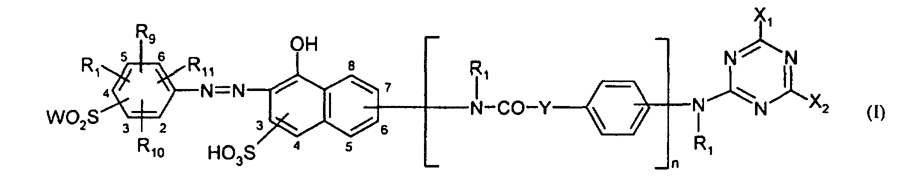 dans laquelle
W signifie OH ou NR₁₃R₁₄,
Y signifie NH ou une liaison directe,
R₉ signifie OH, Cl, un groupe alkyle en C₁-C₄, hydroxyalkyle en C₂-C₄, hydroxyalcoxy en C₂-C₄, NH₂, NO₂, COOH, COO(alkyle en C₁-C₄), SO₂NR₁₃R₁₄, SO₂OR₁, alcoxy en C₁-C₄,
R₁₃ signifie H, un groupe phényle, cycloalkyle ou alkyle en C₁-C₆ éventuellement substitué par NR₁₆R₁₇ ou OH;
R₁₄ signifie H, alkyle en C₁-C₆, éventuellement substitué par NR₁₆R₁₇ ou OH,
chaque R₁ signifie indépendamment H, un groupe alkyle en C₁-C₄ ou 2-hydroxy-éthyle,
R₁₀ signifie Cl, un groupe alkyle en C₁-C₄, alcoxy en C₁-C₄, NHCO-alkyle en C₁-C₄ ou bien, lorsque R₉ signifie NO₂ et R₁ signifie H ou lorsque R₉ signifie NO₂ et R₁ signifie CH₃, R₁₀ peut alors signifier NO₂,
R₁₁ signifie H avec l'exception que lorsque R₁ et R₉ et R₁₀ signifient CH₃, R₁₁ signifie alors CH₃, et lorsque R₉ et R₁₀ signifient Cl et R₁ signifie H, R₁₁ signifie alors Cl,
n signifie 0 ou 1,
X₁ et X₂ signifient, indépendamment l'un de l'autre, un groupe amino aliphatique, cycloaliphatique, aromatique ou hétérocyclique, ledit groupe amino comprenant un atome d'azote protonable ou un groupe ammonium quaternaire, et signifiant un groupe mono(alkyl en C₁-C₄)-amino aliphatique, cycloaliphatique, aromatique ou hétérocyclique, le groupe alkyle en C₁-C₄ étant non substitué ou monosubstitué par un halogène ou par un groupe alkyle en C₁-C₄, alcoxy en C₁-C₄, phényle ou hydroxy; un groupe di(alkyl en C₁-C₄)-amino aliphatique, cycloaliphatique, aromatiquec ou hétérocyclique, les groupes alkyle en C₁-C₄ étant indépendamment non substitués ou monosubstitués par un halogène ou par un groupe alkyle en C₁-C₄, alcoxy en C₁-C₄, phényle ou hydroxy; un groupe cycloalkylamino en C₅-C₆, le groupe cycloalkyle étant non substitué ou substitué par un ou deux groupes alkyle en C₁-C₂; un groupe phénylamino, le cycle phényle étant non substitué ou portant un ou deux substituants choisis parmi les halogènes et les groupes alkyle en C₁-C₄, alcoxy en C₁-C₄, hydroxy et phénoxy; ou un cycle à 5 ou 6 chaînons contenant un ou deux hétéro-atomes, O ou S en plus de N, lequel noyau hétérocyclique est non substitué ou substitué par un ou deux groupes alkyle en C₁-C₄; ou un groupe Z, où Z est choisi indépendamment parmi les groupes suivants 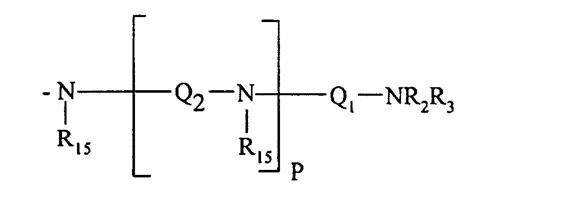 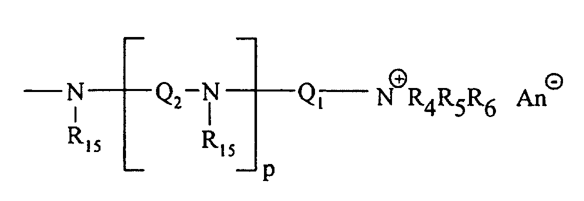 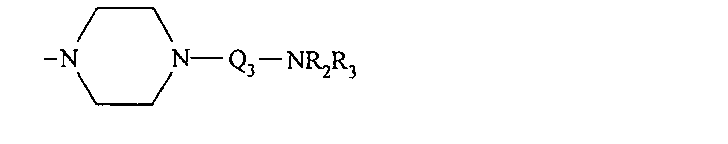 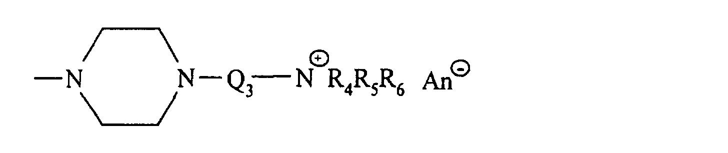 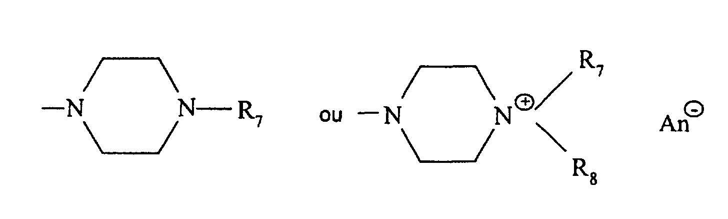 où
p signifie 0 ou le nombre entier 1, 2 ou 3,
chaque R₁₅ signifie indépendamment l'hydrogène, un groupe alkyle en C₁-C₄ non substitué ou un groupe alkyle en C₁-C₄ monosubstitué par un groupe hydroxy, par un halogène, par un groupe cyano ou par un groupe alcoxy en C₁-C₄,
chaque R₂ et R₃ signifie indépendamment l'hydrogène, un groupe alkyle en C₁-C₆ non substitué, alkyle en C₂-C₆ monosubstitué par un groupe hydroxy ou cyano, phényle ou phényl-alkyle en C₁-C₄, où le cycle phényle de ces deux derniers groupes est non substitué ou porte de un à trois substituants choisis parmi le chlore et les groupes alkyle en C₁-C₄, alcoxy en C₁-C₄, cycloalkyle en C₅-C₆ non substitué ou cycloalkyle en C₅-C₆ substitué par un à trois groupes alkyle en C₁-C₄, ou un cycle pyridinium, ou bien
R₂ et R₃ forment ensemble, avec l'atome d'azote auquel ils sont fixés, un cycle à 5 ou 6 chaînons contenant de un à trois hétéro-atomes (un ou deux N, O ou S supplémentaires, en plus de N), lequel noyau hétérocyclique est non substitué ou substitué par un ou deux groupes alkyle en C₁-C₄,
chaque R₄ et R₅ a indépendamment l'une des significations de R₂ et R₃, excepté l'hydrogène,
R₆ signifie un groupe alkyle en C₁-C₄ ou benzyle, avec l'exception que R₆ ne signifie pas un groupe benzyle lorsque R₄ et R₅ ont l'une des significations cycliques de R₂ et R₃, ou bien
R₄, R₅ et R₆ forment ensemble, avec l'atome d'azote auquel ils sont fixés, un cycle pyridinium non substitué ou substitué par un ou deux groupes méthyle,
Q₁ signifie un groupe alkylène en C₂-C₈, alkylène en C₃-C₆ substitué par un ou deux groupes hydroxy, alkylène en C₁-C₆-1,3- ou 1,4-phénylène, ou bien-*NHCOCH₂, où * indique l'atome lié à -NR₁₅,
Q₂ signifie un groupe alkylène en C₂-C₈, alkylène en C₃-C₆ substitué par un ou deux groupes hydroxy, alkylène en C₁-C₆-1,3- ou -1,4-phénylène ou 1,3- ou 1,4-phénylène,
Q₃ signifie un groupe alkylène en C₂-C₈,
R₇ signifie l'hydrogène, un groupe alkyle en C₁-C₆ non substitué ou un groupe alkyle en C₁-C₆ monosubstitué par un groupe hydroxy, par un groupe cyano, par le chlore ou par un groupe phényle,
R₈ signifie un groupe alkyle en C₁-C₆ non substitué ou alkyle en C₁-C₆ monosubstitué par un groupe hydroxy, par un groupe cyano ou par le chlore, et
An^{θ} signifie un anion non chromophore;
R₁₆ et R₁₇ signifient indépendamment l'hydrogène, un groupe alkyle en C₁-C₄ non substitué, alkyle en C₁-C₄ monosubstitué par un groupe hydroxy ou cyano, phényle ou (phényl)-alkyle en C₁-C₄, où le cycle phényle des deux derniers groupes est non substitué ou porte de un à trois substituants choisis parmi le chlore et les groupes alkyle en C₁-C₄, alcoxy en C₁-C₄, cycloalkyle en C₅-C₆ non substitué ou cycloalkyle en C₅-C₆ substitué par un à trois groupes alkyle en C₁-C₄, un groupe amino-alkyle en C₁-C₄ primaire, secondaire ou tertiaire, le groupe alkyle étant de préférence un groupe propyle, ou un cycle pyridine qui est éventuellement substitué,
les composés étant sous forme de sels internes ou externes.

2. Un composé selon la revendication 1, dans lequel n signifie 0.

3. Un composé selon la revendication 1 ou 2, dans lequel R₁ signifie R₁ₐ, chaque R₁ₐ signifiant indépendamment l'hydrogène ou un groupe méthyle, éthyle ou 2-hydroxy-éthyle.

4. Un composé selon l'une quelconque des revendications précédentes, dans lequel les symboles R₉ et R₁₀ situés sur le cycle phényle qui est fixé au groupe azo, sont choisis indépendamment dans l'ensemble constitué par CH₃, OCH₃, OC₂H₅, Cl et NO₂.

5. Un composé selon l'une quelconque des revendications précédentes, dans lequel chaque symbole X₁ et X₂ signifie Zₐ, chaque Zₐ étant choisi indépendamment parmi les groupes suivants 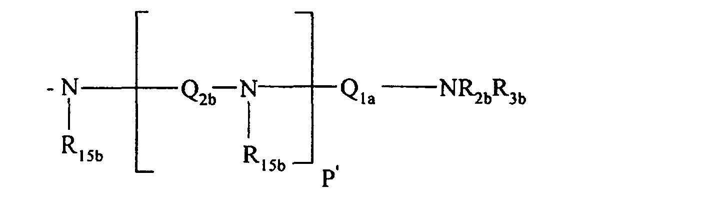 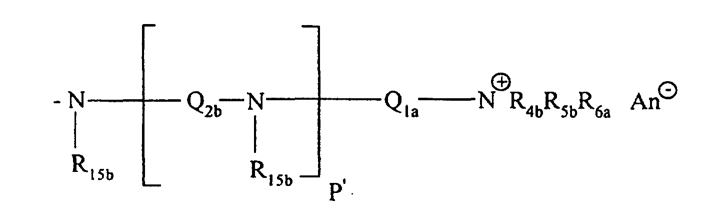 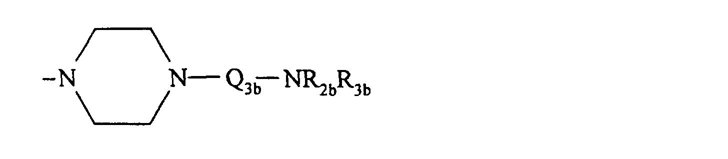 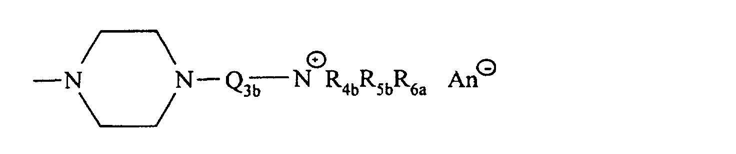 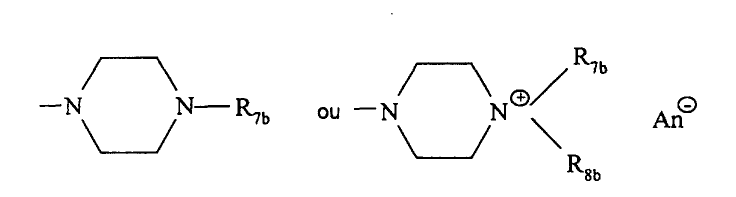 formules dans lesquelles
P' signifie 0 ou 1,
R_{15b} signifie l'hydrogène ou un groupe méthyle ou 2-hydroxyéthyle,
Q₁ₐ signifie -*NHCOCH₂-, dans lequel *indique l'atome lié à-NR_{15b}, un groupe alkylène en C₂-C₆ non substitué, alkylène en C₃-C₄ monosubstitué par un groupe hydroxy, -(CH₂)₁₋₄-1,3- ou -1,4-phénylène ou 1,3- ou 1,4-phénylène,
chaque Q_{2b} et Q_{3b} signifie un groupe alkylène linéaire en C₂-C₆,
chaque R_{2b} et R_{3b} signifie indépendamment l'hydrogène, un groupe alkyle non substitué en C₁-C₄ ou 2-hydroxéthyle, ou un cycle pyridinium,
chaque R_{4b} et R_{5b} signifie indépendamment un groupe alkyle non substitué en C₁-C₄ ou 2-hydroxy-éthyle et R₆ₐ signifie un groupe alkyle en C₁-C₄ ou benzyle, ou bien
R_{4b}, R_{5b} et R₆ₐ forment ensemble, avec l'atome d'azote auquel ils sont fixés, un cycle pyridinium non substitué ou substitué par un ou deux groupes méthyle,
R_{7b} signifie l'hydrogène ou un groupe méthyle, éthyle ou 2-hydroxy-éthyle,
R_{8b} signifie un groupe méthyle, éthyle ou 2-hydroxyéthyle, et
An^{θ} signifie un anion non chromophore.

6. Une composition comprenant un composé tel que revendiqué à l'une quelconque des revendications 1 à 5.

7. Un substrat qui a été teint ou imprimé avec un composé tel que revendiqué à l'une quelconque des revendications 1 à 5 ou avec une composition telle que revendiquée à la revendication 6.

8. Utilisation d'un composé tel que revendiqué à l'une quelconque des revendications 1 à 5 ou d'une composition telle que revendiquée à la revendication 6, pour la teinture ou l'impression.

9. Un procédé de préparation d'un composé de formule I tel que revendiqué à la revendication 1, comprenant la réaction du sel de diazonium d'une amine de formule II, répondant à la formule suivante: 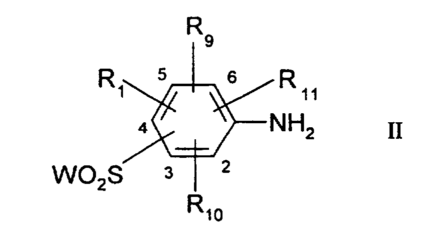 avec un composé de formule III, répondant à la formule suivante: 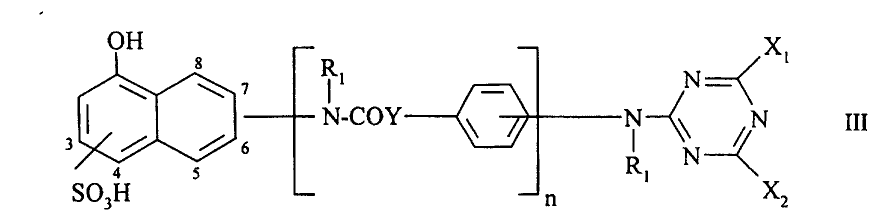 formules dans lesquelles WO₂S, R₁, R₉, R₁₀, R₁₁, Y, X₁ and X₂ sont tels que définis à la revendication 1.
